# FASCICULE DE BREVET EUROPEEN

(11) **EP 1 196 000 B1**
(45) Date de publication et mention de la délivrance du brevet: **26.03.2008**
(21) Numéro de dépôt: 01402456.6
(22) Date de dépôt: 25.09.2001
(51) Int. Cl.: H04Q 7/36

(54) **Procédé pour conserver et/ou rétablir des liaisons de communication dans un réseau planifié à composantes mobiles**
Verfahren zur Haltung und/oder Wiederherstellung von Kommunikationsverbindungen in einem geplanten Netz mit mobilen Komponenten
Method to keep and/or re-establish communication links in a scheduled network having mobile components

(30) Priorité: 26.09.2000 FR 0012216
(43) Date de publication de la demande: 10.04.2002
(73) Titulaire: Thales, 75008 Paris (FR)
(72) Inventeur: Lete, Ghislain, Thales, Intellectual Property, 94117 Arcueil Cedex (FR)
(74) Mandataire: Dudouit, Isabelle

(56) Documents cités:
- WO-A-98/29962
- GB-A- 2 346 511
- US-A- 5 168 575
- US-A- 5 652 751
- US-A- 5 943 322
- GEG-MARCONI HAZELTINE: "LINK-16 SUMMARY" DISPONIBLE PAR INTERNET: <URL: HTTP://PRODEVWEB.PRODEV.USNA.EDU/SEANAV/NS 40X/NS401/INTRODUCTION/HTML/LINKSUM.HTML> LE 16 AOUT 2001, avril 1997 (1997-04), pages 1-6, XP002175223

## Description

L'invention concerne un procédé permettant de conserver et/ou de rétablir des liaisons de communication dans un réseau planifié dont les composantes peuvent être mobiles.

L'invention s'applique notamment dans des réseaux de communication MIDS (abréviation anglo-saxonne de Multifunctional Information Distribution System) basé sur le terminal radio MIDS-LV (abréviation anglo-saxonne de Multifunctional Information Distribution System Low Volume) et son architecture TDMA (Time Division Multiple Access). Le procédé met en oeuvre le protocole de liaison L16 (Data Link) standardisé STANAG 5516 (STANdardization Agreement).

L'invention s'applique plus particulièrement dans les déploiements de réseaux terrestres MIDS L16.

Le réseau de communications MIDS précité est sécurisé, résistant au brouillage, non modal et de haute capacité. Les communications sont régies par la définition du cycle TDMA qui se révèle être une opération lourde et complexe réalisée en amont dans une phase dite de conception ou planification du réseau et mettant en présence toutes les composantes MIDS devant former le réseau, telles que des sous-réseaux terrestres, aériens et maritimes partageant des ressources TDMA MIDS.

Les réseaux radio MIDS L16 sont habituellement mis en oeuvre dans les domaines aériens ou maritimes dont une caractéristique est la portée radio-électrique étendue, par exemple plusieurs centaines de kilomètres. Le mode d'utilisation consiste dans la définition d'un seul réseau organisé et maîtrisé dès la phase complexe de conception du réseau.

L'emploi de tels réseaux se généralise actuellement dans le domaine terrestre d'une part pour ses capacités et d'autre part pour les besoins d'interopérabilité dans des déploiements combinés Terre-Air-Marine.

Dans le domaine terrestre, la portée radio-électrique du réseau MIDS présente l'inconvénient d'être limitée à quelques dizaines de kilomètres et de présenter une sensibilité à l'environnement naturel du déploiement. Des obstacles peuvent en effet venir gêner la transmission des informations. Ainsi les services de communications entre les composantes mobiles du réseau peuvent être fortement dégradées voire inhibées au cours du déploiement. La mobilité apparaît donc comme un nouvel élément ou paramètre dimensionnant dans le déploiement des réseaux MIDS L16 par exemple.

En général, les aléas associés à un déploiement réel, en particulier la mobilité pour les sous-réseaux terrestres, nécessitent d'adapter le cycle TDMA. Toutefois la mise en oeuvre d'une telle procédure de replanification de réseau (par adaptation du cycle TDMA) est incompatible avec les performances attendues d'un système de communications MIDS et des contraintes d'organisation du réseau.

Le brevet US 5 168 575 divulgue un procédé permettant de réutiliser des ressources selon la charge du réseau.

Le brevet US 5 652 751 développe un principe de routage dans un réseau radio mobile ayant pour but d'accroître les performances du réseau en terme de débit et de limitation de congestion.

L'invention vise à intégrer les nouvelles contraintes d'emploi sans déroger à l'exigence fondamentale d'un réseau MIDS : l'organisation et la maîtrise du réseau dans toutes les phases de déploiement.

Le procédé selon l'invention permet notamment de définir des réseaux radio TDMA de MIDS-LVT adaptatifs aux fluctuations de connectivité dues à la mobilité de ses composantes disposant notamment des caractéristiques suivantes :
- ils assurent la continuité des services de communications entre les composantes mobiles,
- ils sont déterministes,
- ils sont stables, et
- ils sont gérables.

L'invention propose un réseau radio MIDS adaptatif à cycle TDMA constant et met en oeuvre le principe MIDS de relayage par repromulgation et repose sur un équilibre entre la conception du réseau, son architecture et sa conduite temps-réel.

L'invention concerne un procédé pour conserver et/ou rétablir des communications au sein d'un réseau à ressources planifiées, ledit réseau comportant au moins plusieurs stations Si réparties en sous-groupes, chacun desdits sous-groupes comportant au moins : un ou plusieurs groupes {Gi} composés chacun d'au moins deux stations Si reliées entre elles, la liaison entre ces deux stations pouvant évoluer au cours du temps.

Il est caractérisé en ce qu'il comporte au moins les étapes suivantes :
au sein d'un sous-groupe,
   a) associer une station fictive FGi à au moins un groupe {Gi}, ladite station fictive FGi conservant en mémoire les ressources allouées initialement lors de la conception du réseau pour former les différents liens de communication entre les stations et comprenant différentes ressources RGi allouées aux stations du groupe {Gi}à une station fictive des ressources L 16 MIDS étant associées, lesdites ressources étant désignées Rgi,
   b) à partir de l'information d'évolution sur la structure d'un groupe {Gi} la modification des liaisons entre stations dans le groupe {Gi} :
   c) positionner au moins une station relais Ri adaptée à conserver et/ou rétablir les communications entre au moins deux stations d'au moins un groupe {Gi}, en utilisant l'information dont la structure de groupe évolue,
   d) réallouer les ressources de la station fictive FGi à au moins une station relais.

L'étape d) est par exemple réalisée à partir d'une station principale adaptée pour la conception du réseau et l'allocation de ressources, telle qu'une station NCS.

Les stations relais Ri sont pourvues par exemple d'autant de plans de communications que de groupes {Gi} et l'allocation des ressources de la station fictive est réalisée par exemple par une activation locale.

L'invention concerne aussi un système pour conserver et/ou rétablir des communications au sein d'un réseau à ressources planifiées, ledit réseau comportant au moins plusieurs stations Si réparties en plusieurs sous-groupes, chacun desdits sous-groupes comportant au moins : un ou plusieurs groupes {Gi} composés chacun d'au moins deux stations Si reliées entre elles, la liaison entre ces deux stations pouvant évoluer au cours du temps.

Il est caractérisé en ce qu'il comporte au moins au sein d'un sous-groupe :
➢ une station fictive FGi à au moins un groupe {Gi}, ladite station fictive FGi conservant en mémoire les ressources allouées initialement lors de la conception du réseau pour former les différents liens de communication entre les stations et comprenant différentes ressources RGi allouées aux stations du groupe {Gi}, à une station fictive des ressources L 16 MIDS étant associées, lesdites ressources étant désignées Rgi,
➢ un dispositif adapté à connaître l'évolution de la structure du groupe,
➢ une ou plusieurs stations relais Ri adaptées à conserver et/ou rétablir les communications entre les différents éléments d'un groupe {Gi},
➢ un dispositif permettant de réallouer les ressources de la station fictive FGi à au moins une des stations relais Ri mises en place.

L'invention présente notamment comme avantage de préserver en permanence des services de communications.

L'ensemble des caractéristiques du réseau est connu dès la phase de conception. Le besoin de relayage en cours de déploiement ou d'évolution des communications entre différentes stations ne nécessite pas de besoin supplémentaire en ressources TDMA.

Les stations conservent leur fichier d'initialisation élaboré lors de la conception du réseau durant toute la durée du déploiement ce qui confère au procédé un caractère dénommé iso-plan. En cours de déploiement il n'est pas nécessaire d'invoquer la procédure de conception.

Les relais sont banalisés et peuvent être utilisés en fonction des besoins de relayage observés en cours de déploiement.

Les ressources allouées à chaque station sont maîtrisées dès la conception du réseau.

D'autres caractéristiques et avantages apparaîtront à la lecture de la description détaillée d'un mode de réalisation pris à titre d'exemple non limitatif et illustré par les dessins annexés où :
- la figure 1 montre un réseau L 16 MIDS, et
- la figure 2 schématise un groupe de stations dont les liaisons peuvent évoluer dans le temps et la station fictive associée.

De manière à mieux faire comprendre l'objet de l'invention la description donnée ci-après à titre illustratif et nullement limitatif décrit un mode particulier de réalisation de l'invention, le « mode dynamique », pour lequel la gestion de la mobilité en phase de conduite temps réel est prédominante.

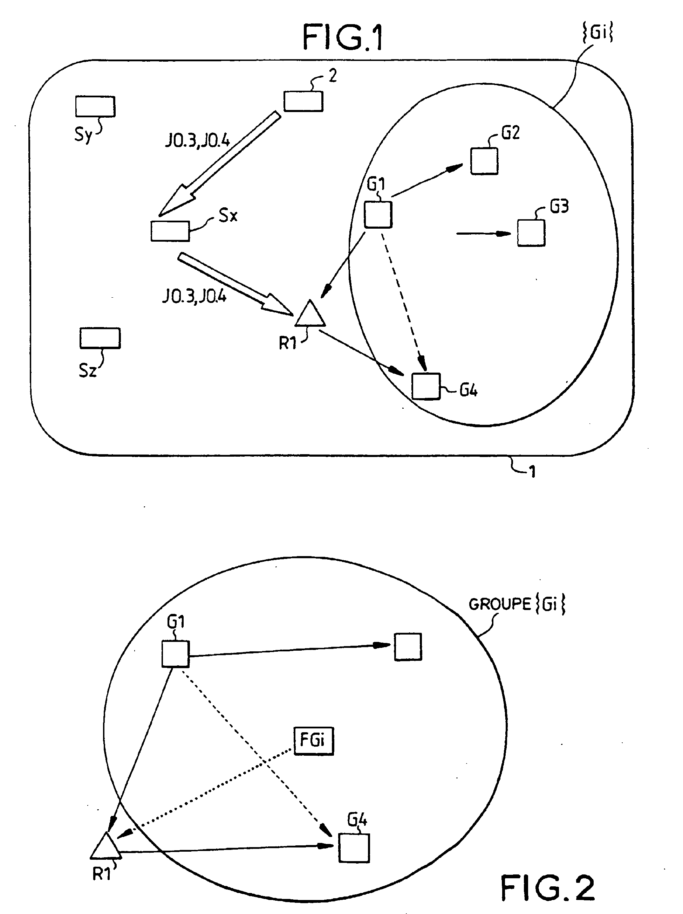

La figure 1 représente un réseau L16 MIDS 1 comportant plusieurs stations L16, Si (Sx, Sy, Sz,...) dans lesquels les éléments suivants sont particularisés :
- une station 2 NCS (abréviation anglo-saxonne de Network Control Station) ayant notamment pour fonction de réaliser la conception du réseau à partir des besoins en communications entre les stations Si et disposant de moyens de conduite temps réel du réseau déployé,
- un réseau technique composé de l'ensemble des sous-réseaux dédiés aux procédures techniques par exemple la synchronisation, le PPLI (abréviation anglo-saxonne de Precise Participant Localisation and Identification) et la conduite en temps réel des stations Si par la station NCS. Ce réseau permet notamment à la station NCS de communiquer avec n'importe quelle station Si. Un sous-réseau désigne à la fois les stations le composant et les ressources du protocole de liaison L16 qui leur sont allouées, ceci correspond entre autre au temps alloué pour la communication,
- un réseau opérationnel défini par l'ensemble des sous-réseaux dédiés aux informations utiles entre les stations Si. En cours d'opération, les stations Si échangent des informations, par exemple, la transmission d'ordres de commandement, la remontée d'informations de signalisations des différentes stations vers le commandement, etc...
- un ou plusieurs relais Ri, chaque relais est un sous-ensemble de stations Si composé de stations dédiées au relayage.

L'architecture de ce réseau peut évoluer au cours du temps. Par exemple, un ensemble de stations Si peut être amené à voir ses liaisons modifiées. Soit {Gi} un groupe de station, sous-ensemble des stations Si, qui forme un sous-réseau opérationnel mobile pour lequel la connexité radio électrique n'est pas garantie a priori au cours du temps.

Le principe mis en oeuvre fait l'hypothèse suivante : la mobilité des stations du groupe {Gi} n'affecte pas les autres sous-réseaux opérationnels, ce qui correspond à l'interaction minimale à la définition du réseau. Dans le cas contraire le principe du procédé selon l'invention est étendu sur plusieurs sous-réseaux.

L'idée de l'invention repose sur la conception d'un réseau qui supporte la mobilité des stations Gi sans faire appel à aucune ressource supplémentaire en allocation de time-slots (durée temporelle allouée à une station).

Pour cela le procédé selon l'invention peut être décomposé en une première phase désignée comme étant une phase de conception du réseau et une deuxième phase relative à la phase de conduite temps-réel du réseau.

### Phase 1 = conception du réseau

Cette première phase comporte les principes et étapes suivants :
Principe P1 : conception du réseau par la station NCS, par exemple de la façon suivante :
   - identifier toutes les stations Si formant le réseau ; dans le cas d'un poste MIDS, il existe un N° unique d'identifiant du poste,
   - définir les stations relais Ri dédiées au relayage, les stations Ri sont dotées du seul réseau technique pour assurer des communications avec la station NCS,
   - élaborer les ressources nécessaires pour toutes les stations Si à partir des besoins opérationnels en communications; les ressources comportent les ressources temporelles dont doit disposer une station Si (time-slot qui lui est alloué),
en pratique, la station NCS génère un fichier d'initialisation MIDS chargé pour chaque station Si et comportant les ressources allouées pour une station. Le fichier d'initialisation comporte aussi les informations suivantes : un numéro d'identification de la station, le positionnement de la station dans un référentiel géographique donné, la puissance d'émission de la station, etc...

### Principe P2

La communication entre les stations mobiles Gi faisant partie d'un sous-groupe et qui sont susceptibles d'évoluer dans le temps s'effectue en utilisant la technique de repromulgation connue de l'Homme du métier. Cette technique fait appel à un contrôle au niveau du message rerouté lorsqu'il n'est pas destiné uniquement à la station le recevant. Les communications entre stations Gi utilisent des « needlines ».

### Principe P3: définition d'une station fictive telle que schématisée à la figure 2.

Pour un groupe {Gi} de stations, on définit une station fictive FGi qui est capable de relayer toutes les communications du groupe. Cette station fictive possède la faculté de conserver en mémoire les ressources allouées initialement lors de la conception du réseau pour former les différents liens de communication entre les stations.

Ainsi, la station fictive FGi conserve en mémoire une image des communications ou des liens de communication existant au sein d'un groupe. En cours d'opération, si nécessaire pour le rétablissement des communications, la station fictive sera matérialisée en une station réelle sur laquelle les ressources seront allouées. Ces données comportent par exemple les ressources temporelles utilisées et allouées de façon réelle aux différentes stations.

Le schéma suivant peut être établi : à une station fictive FGi sont associées des ressources L 16 MIDS dénommées RGi. Ces ressources RGi sont composées par exemple d'informations propres au groupe Gi, par exemple des numéros PG (abréviation anglo-saxonne de participation Group STANAG 5516), des numéros de route, des allocations de time-slots dédiés aux communications du groupe Gi.

### Phase 2 - conduite temps-réel du réseau

L'idée consiste à positionner des relais pour retrouver la configuration des communications existant initialement, cette configuration ayant pu évoluer du fait de la mobilité des stations faisant partie du groupe Gi.

### Principe P4

Pour cela, dans la phase de conduite temps-réel du réseau, une étape consiste à matérialiser une ou plusieurs stations fictives FGi parmi les stations relais Ri et à leur fournir toutes les ressources RGi calculées lors de la conception du réseau. Ceci est possible car une station fictive FGi est adaptée pour conserver en mémoire les ressources initiales

### Principe P5

Un relais Ri reçoit globalement toutes les ressources de la station fictive qui sont transmises à partir de la station NCS.

Par exemple la transmission des ressources est réalisée depuis la NCS par voie radio L 16 sur le réseau technique par l'utilisation des messages liaison L 16 J0.3 et J0.4 où
* J0.3 correspond au time-slot. Il permet d'affecter de manière dynamique les time-slots. Le message transmis est composé des mots J0.3I, J0.3E0, J0.3C1, et
* J0.4 correspond au radio relay control message (message de contrôle pour les relais radio). Il permet la gestion dynamique du relayage par repromulgation. Le message est composé des mots suivants J0.4I, J0.4C2, pour une utilisation exclusive en relayage par repromulgation.

Le procédé s'applique notamment comme un outil prévisionnel. En effet, la station NCS peut recevoir des informations sur une évolution dans le temps des liaisons entre différentes stations constituant un groupe Gi.

De manière à optimiser le nombre de relais à prévoir pour le déploiement en phase de conception, différentes variantes de mise en oeuvre du procédé peuvent être imaginées.

Une première variante consiste par exemple à utiliser un même relais Ri pour plusieurs groupes Gi, Gj avec la condition que les ressources RGi, RGj soient disjointes.

Dans une deuxième variante de mise en oeuvre du procédé, une station Si n'appartenant pas à un ensemble de relais {Ri} est utilisée pour relayer les communications d'un ou de plusieurs groupes Gi, Gj. Pour mettre en oeuvre cette variante, les ressources RGi et RGj doivent être disjointes et ne pas entrer en conflit avec les ressources opérationnelles de la station Si.

Selon un autre mode de réalisation, dénommé « mode statique » par opposition au « mode dynamique » détaillé aux figures 1 et 2, le mode statique privilégie la phase de conception du réseau désignée ci-dessus par phase 1.

Dès la phase de conception du réseau, les stations relais Ri sont par exemple dotées d'autant de plans de communications (fichiers d'initialisation MIDS) que de groupes Gi pour lesquels ils sont susceptibles de participer au relayage. Chaque plan de communication chargé sur un relais Ri est constitué du réseau technique et des ressources RGi dédiées au groupe Gi.

Dans ce mode de réalisation le principe 5 de transmission des ressources est remplacé par une activation locale ou à distance sur le relais Ri du plan de communications adéquat, correspondant au besoin de relayage.

## Revendications

1. Procédé pour conserver et/ou rétablir des communications au sein d'un réseau à ressources planifiées, ledit réseau comportant au moins plusieurs stations Si réparties en sous-groupes, chacun desdits sous-groupes comportant au moins un ou plusieurs groupes {Gi} composés chacun d'au moins deux stations Si reliées entre elles, la liaison entre ces au moins deux stations pouvant évoluer au cours du temps, **caractérisé en ce qu'**il comporte au moins les étapes suivantes :
au sein d'un sous-groupe,
a) associer une station fictive FGi à au moins un groupe {Gi}, ladite station fictive FGi conservant en mémoire les ressources allouées initialement lors de la conception du réseau pour former les différents liens de communication entre les stations et comprenant différentes ressources RGi allouées aux stations du groupe {Gi}, les ressources RGi étant des ressources L16 MIDS
b) à partir d'une information d'évolution sur la structure du groupe {Gi}, cette évolution comprenant une modification des liaisons entre stations dans le groupe {Gi} :
c) positionner au moins une station relais Ri adaptée à conserver et/ou rétablir les communications entre au moins deux stations d'au moins un groupe {Gi},en utilisant l'information d'évolution sur la structure du groupe {Gi}
d) réallouer les ressources de la station fictive FGi à au moins une station relais.

2. Procédé selon la revendication 1 **caractérisé en ce que** l'étape d) est réalisée à partir d'une station principale adaptée pour la conception du réseau et l'allocation de ressources, telle qu'une station de commande de réseau, NCS.

3. Procédé selon l'une des revendications 1 et 2 **caractérisé en ce qu'**un relais Ri est utilisé pour plusieurs groupes {Gi}, {Gj} lorsque les ressources RGi, RGj sont disjointes.

4. Procédé selon l'une des revendications 1 et 2 **caractérisé en ce qu'**une station Si associée à des ressources RGi n'appartenant pas au groupe {Gi} est utilisée pour recevoir les ressources RGj d'une station fictive FGj, lorsque les ressources RGi et RGj sont disjointes.

5. Procédé selon l'une des revendications 1 et 2 **caractérisé en ce que** les stations relais Ri sont pourvues d'autant de plans de communications que de groupes {Gi} et **en ce que** l'allocation des ressources de la station fictive est réalisée par une activation locale.

6. Procédé selon l'une des revendications précédentes **caractérisé en ce que** l'étape d) permettant de réallouer les ressources comporte des étapes de réallocation de temps dédiés aux communications du groupe {Gi} et/ou des numéros de groupes de participation, PG et/ou des numéros de route.

7. Système pour conserver et/ou rétablir des communications au sein d'un réseau à ressources planifiées, ledit réseau comportant au moins plusieurs stations Si réparties en plusieurs sous-groupes, chacun desdits sous-groupes comportant au moins : un ou plusieurs groupes {Gi} composés chacun d'au moins deux stations Si reliées entre elles, la liaison entre ces au moins deux stations pouvant évoluer au cours du temps, **caractérisé en ce qu'**il comporte au moins au sein d'un sous-groupe :
➢ une station fictive FGi à au moins un groupe {Gi}, ladite station fictive FGi conservant en mémoire les ressources allouées initialement lors de la conception du réseau pour former les différents liens de communication entre les stations et comprenant différentes ressources RGi allouées aux stations du groupe {Gi}, les ressources RGi étant des ressources L16 MIDS
➢ un dispositif adapté à connaître l'évolution de la structure du groupe,
➢ une ou plusieurs stations relais Ri adaptées à conserver et/ou rétablir les communications entre les différents éléments d'un groupe {Gi},
➢ un dispositif permettant de réallouer les ressources de la station fictive FGi à au moins une des stations relais Ri mises en place.

8. Système selon la revendication 7 **caractérisé en ce que** le dispositif adapté à réallouer les ressources est une station adaptée pour la conception du réseau et l'allocation de ressources, telle qu'une station de commande de réseau, NCS.

9. Système selon l'une des revendications 7 et 8 **caractérisé en ce que** les stations relais Ri sont pourvues d'autant de plans de communications que de groupes {Gi}.

10. Utilisation du procédé selon l'une des revendications 1 à 6 et du système selon l'une des revendications 7 à 9 pour les déploiements de réseau terrestres MIDS L16.

## Claims

1. Method for maintaining and/or reconnecting communications within a network with planned resources, said network comprising at least a number of stations Si divided into subgroups, each of said subgroups comprising at least one or more groups {Gi} each consisting of at least two interlinked stations Si, the link between these at least two stations being able to change over time, **characterized in that** it comprises at least the following steps:
within a subgroup:
a) associating a dummy station FGi with at least one group {Gi}, said dummy station FGi retaining in memory the resources initially allocated when the network was designed to form the various communication links between the stations and comprising different resources RGi allocated to the stations of the group {Gi}, the resources RGi being MIDS L16 resources,
b) based on an item of change information concerning the structure of the group {Gi}, this change comprising a modification of the links between stations in the group {Gi}:
c) positioning at least one relay station Ri adapted to maintain and/or reconnect the communications between at least two stations of at least one group {Gi}, by using the item of change information concerning the structure of the group {Gi},
d) reallocating the resources of the dummy station FGi to at least one relay station.

2. Method according to Claim 1, **characterized in that** the step d) is performed from a main station adapted to design the network and the allocation of resources, such as a network control station, NCS.

3. Method according to one of Claims 1 and 2, **characterized in that** a relay Ri is used for a number of groups {Gi}, {Gj} when the resources RGi, RGj are disconnected.

4. Method according to one of Claims 1 and 2, **characterized in that** a station Si associated with resources RGi not belonging to the group {Gi} is used to receive the resources RGj of a dummy station FGj, when the resources RGi and RGj are separated.

5. Method according to one of Claims 1 and 2, **characterized in that** the relay stations Ri are provided with as many communication plans as groups {Gi} and **in that** the allocation of the resources of the dummy station is handled by a local activation.

6. Method according to one of the preceding claims, **characterized in that** the step d) for reallocating the resources includes steps for reallocating times dedicated to the communications of the group {Gi} and/or participation group PG numbers and/or route numbers.

7. System for maintaining and/or reconnecting communications within a network with planned resources, said network comprising at least a number of stations Si divided into a number of subgroups, each of said subgroups comprising at least: one or more groups {Gi} each consisting of at least two interlinked stations Si, the link between these at least two stations being able to change over time, **characterized in that** it comprises at least within a subgroup:
➢ a dummy station FGi with at least one group {Gi}, said dummy station FGi retaining in memory the resources initially allocated when the network was designed to form the different communication links between the stations and comprising different resources RGi allocated to the stations of the group {Gi}, the resources RGi being MIDS L16 resources,
➢ a device adapted to know the change to the structure of the group,
➢ one or more relay stations Ri adapted to maintain and/or reconnect the communications between the various elements of a group {Gi},
➢ a device for reallocating the resources of the dummy station FGi to at least one of the relay stations Ri put in place.

8. System according to Claim 7, **characterized in that** the device adapted to reallocate the resources is a station adapted to design the network and allocating resources, such as a network control station, NCS.

9. System according to one of Claims 7 and 8, **characterized in that** the relay stations Ri are provided with as many communication plans as groups {Gi}.

10. Use of the method according to one of Claims 1 to 6 and of the system according to one of Claims 7 to 9 for MIDS L16 terrestrial network deployments.

## Patentansprüche

1. Verfahren zur Haltung und/oder Wiederherstellung von Kommunikationen in einem Netz mit geplanten Ressourcen, wobei das Netz mindestens mehrere Stationen Si umfasst, die in Untergruppen unterteilt sind, wobei jede der Untergruppen mindestens eine oder mehrere Gruppen (Gi) umfasst, die jeweils mindestens aus zwei untereinander verbundenen Stationen Si bestehen, wobei die Verbindung zwischen diesen mindestens zwei Stationen sich über die Zeit entwickeln kann, **dadurch gekennzeichnet, dass** es mindestens die folgenden Schritte umfasst:
in einer Untergruppe
a) das Assoziieren einer fiktiven Station FGi mit mindestens einer Gruppe {Gi}, wobei die fiktive Station FGi die anfangs beim Aufbau des Netzes zum Bilden der verschiedenen Kommunikationsverbindungen zwischen den Stationen zugewiesenen Ressourcen im Speicher behält und verschiedene den Stationen der Gruppe {Gi} zugewiesene Ressourcen umfasst, wobei die Ressourcen RGi L16 MIDS-Ressourcen sind;
b) von einer Entwicklungsinformation über die Struktur der Gruppe {Gi} ausgehend, wobei diese Entwicklung eine Modifikation der Verbindungen zwischen Stationen in der Gruppe {Gi} umfasst:
c) Positionieren mindestens einer Relaisstation Ri, die dazu angepasst ist, die Kommunikationen zwischen mindestens zwei Stationen mindestens einer Gruppe {Gi} unter Verwendung von Entwicklungsinformationen über die Struktur der Gruppe {Gi} zu halten und/oder wiederherzustellen,
d) Neuzuweisen der Ressourcen der fiktiven Station FGi an mindestens eine Relaisstation.

2. Verfahren nach Anspruch 1, **dadurch gekennzeichnet, dass** der Schritt d) ausgehend von einer Hauptstation ausgeführt wird, die für den Aufbau des Netzes und die Zuweisung von Ressourcen angepasst ist, wie eine Steuerstation des Netzes, NCS.

3. Verfahren nach einem der Ansprüche 1 und 2, **dadurch gekennzeichnet, dass** ein Relais Ri für mehrere Gruppen {Gi}, {Gj} verwendet wird, wenn die Ressourcen RGi, RGj unverbunden sind.

4. Verfahren nach einem der Ansprüche 1 und 2, **dadurch gekennzeichnet, dass** eine mit RGi-Ressourcen, die nicht zur Gruppe {Gi} gehören, assoziierte Station Si verwendet wird, um die Ressourcen RGj einer fiktiven Station FGj zu empfangen, wenn die Ressourcen RGi und RGj unverbunden sind.

5. Verfahren nach einem der Ansprüche 1 und 2, **dadurch gekennzeichnet, dass** die Relaisstationen Ri mit soviel Kommunikationsplänen wie Gruppen {Gi} versehen sind, und dass die Zuweisung der Ressourcen der fiktiven Station durch eine lokale Aktivierung ausgeführt wird.

6. Verfahren nach einem der vorhergehenden Ansprüche, **dadurch gekennzeichnet, dass** Schritt d) zum Neuzuweisen der Ressourcen die Schritte der Neuzuweisung der den Kommunikationen der Gruppe {Gi} fest zugewiesenen Zeiten und/oder der Nummern der Teilnehmergruppen PG und/oder der Nummern der Route umfasst.

7. System zum Halten und/oder Wiederherstellen von Kommunikationen in einem Netz mit geplanten Ressourcen, wobei das Netz mindestens mehrere Stationen Si umfasst, die in mehrere Untergruppen unterteilt sind, wobei jede der Untergruppen mindestens umfasst: eine oder mehrere Gruppen {Gi}, die jeweils aus mindestens zwei untereinander verbundenen Stationen Si bestehen, wobei die Verbindung zwischen diesen mindestens zwei Stationen sich über die Zeit entwickeln kann, **dadurch gekennzeichnet, dass** es in mindestens einer Untergruppe umfasst:
- eine fiktive Station FGi in mindestens einer Gruppe {Gi}, wobei die fiktive Station FGi die anfangs beim Aufbau des Netzes zum Bilden der verschiedenen Kommunikationsverbindungen zwischen den Stationen zugewiesenen Ressourcen im Speicher behält und verschiedene Ressourcen RGi umfasst, die den Stationen der Gruppe {Gi} zugewiesen sind, wobei es sich bei den Ressourcen RGi um L16 MIDS-Ressourcen handelt;
- eine Vorrichtung, die dazu angepasst ist, die Entwicklung der Struktur der Gruppe zu kennen;
- eine oder mehrere Relaisstationen Ri, die dazu angepasst sind, die Kommunikationen zwischen den verschiedenen Elementen einer Gruppe {Gi} zu halten und/oder wiederherzustellen;
- eine Vorrichtung, die die Neuzuweisung der Ressourcen der fiktiven Station FGi an mindestens eine der angeordneten Relaisstationen Ri ermöglicht.

8. System nach Anspruch 7, **dadurch gekennzeichnet, dass** die Vorrichtung, die zum Neuzuweisen der Ressourcen angepasst ist, eine Station ist, die für den Aufbau des Netzes und die Zuweisung von Ressourcen angepasst ist, wie eine Station zum Steuern des Netzes, NCS.

9. System nach einem der Ansprüche 7 und 8, **dadurch gekennzeichnet, dass** die Relaisstationen Ri mit soviel Kommunikationsplänen wie Gruppen {Gi} versehen.

10. Verwendung des Verfahrens nach einem der Ansprüche 1 bis 6 und des Systems nach einem der Ansprüche 7 bis 9 für die Einsätze von terrestrischen MIDS L16-Netzen.
